# EUROPÄISCHE PATENTSCHRIFT

(11) **EP 3 244 699 B1**
(45) Veröffentlichungstag und Bekanntmachung des Hinweises auf die Patenterteilung: **23.09.2020**
(21) Anmeldenummer: 17170137.8
(22) Anmeldetag: 09.05.2017
(51) Int. Cl.: H05B 45/12, H05B 45/18

(54) **LEUCHTMITTEL MIT REGELBARER BESTRAHLUNGSSTÄRKE**
ILLUMINANT WITH ADJUSTABLE IRRADIANCE
ÉCLAIRAGE AYANT UNE INTENSITÉ DE RAYONNEMENT RÉGLABLE

(30) Priorität: 11.05.2016 AT 504352016
(43) Veröffentlichungstag der Anmeldung: 15.11.2017
(73) Patentinhaber: B&R Industrial Automation GmbH, 5142 Eggelsberg (AT)
(72) Erfinder: Huber, Matthias, 84568 Pleiskirchen (DE)
(74) Vertreter: Patentanwälte Pinter & Weiss OG

(56) Entgegenhaltungen:
- EP-A1- 2 336 741
- DE-A1- 2 833 635
- US-A1- 2010 066 253
- US-A1- 2015 146 751
- US-B1- 6 303 916

## Beschreibung

Die gegenständliche Erfindung betrifft eine Anordnung zur Beleuchtung in einer Machine Vision Anwendung umfassend ein Leuchtmittel, mit zumindest einer Lichtquelle, die Licht mit einer Strahlungsleistung abgibt und ein Verfahren zur Beleuchtung in einer Machine Vision Anwendung, wobei Licht mit einer Strahlungsleistung von einer Lichtquelle abgegeben wird, sowie die Verwendung des Leuchtmittels.

In der industriellen Beleuchtung, insbesondere bei sogenannten Machine Vision Anwendungen, werden LEDs als Lichtquelle in Leuchtmitteln nach und nach zum Stand der Technik und verdrängen sonstige Leuchtmittel mittlerweile auch in Hinblick auf die Strahlungsleistung. Bei Machine Vision handelt es sich bekanntermaßen um Verfahren zum Steuern bzw. Regeln technischer Prozesse, beispielsweise Maschinen oder Anlagen, wobei die zum Steuern bzw. Regeln benötigte Information zumindest teilweise anhand der automatisierten Bildverarbeitung einer mit einer Kamera aufgenommenen Aufnahme gewonnen wird. Ein Machine Vision System umfasst daher eine Kamera, ein Leuchtmittel mit einer Lichtquelle zum Ausleuchten zumindest des aufgenommenen Bereichs und eine Auswerteeinheit zum Auswerten der Aufnahme, wobei unter Aufnahme sowohl ein oder mehrere einzelne Bild(er), als auch eine Sequenz von Bildern, also ein Film, zu verstehen ist. Eine möglichst homogene und konstante Beleuchtung des aufgenommenen Bereichs während der Bildaufnahme ist für Machine Vision Anwendungen wesentlich, um die automatisierte Bildverarbeitung sicherstellen zu können.

Ein wichtiger Parameter im Bereich der Beleuchtung für Machine Vision Anwendungen ist daher eine möglichst konstante abgegebene Strahlungsleistung des Leuchtmittels, die wiederum dafür verantwortlich ist, dass die Bestrahlungsstärke (Strahlungsleistung pro Flächeneinheit in einem bestimmten Arbeitsabstand) möglichst konstant ist. Diese Parameter können wiederum Einfluss auf die Steuerung der Kamera, z.B. der Shutterzeit, des Kontrasts, der Blendeneinstellung, usw., des Machine Vision Systems haben.

Leider sind LEDs einer starken Schwankung bezüglich der abgegebenen Strahlungsleistung unterworfen. Diese Schwankungen können beispielsweise durch Alterung oder auch Schwankungen der Umgebungstemperatur hervorgerufen werden und betreffen den gesamten ausgestrahlten Wellenlängenbereich der LED, insbesondere auch den für viele Machine Vision Anwendungen interessanten Rotbereich (in einem Wellenlängenbereich von ca. 600-670nm). An ähnlichen Problemen leiden jedoch auch andere Lichtquellen.

Dieses Problem führt beispielsweise in der Praxis dazu, dass in Machine Vision Anwendungen Leuchtmittel (z.B. LEDs) oft eine längere Zeit lang eingeschalten werden bevor eine Auswertung gestartet wird, um eine in den ersten 15-30 Minuten auftretende Schwankung der Strahlungsleistung, hervorgerufen durch die steigende Eigenerwärmung zu minimieren. Diese Schwankung der Strahlungsleistung kann dadurch jedoch nicht gänzlich eliminiert werden, da die abgegebene Strahlungsleistung von vielen weiteren Faktoren, wie beispielsweise der Erwärmung des Leuchtmittels, bzw. der Lichtquelle oder der Umgebungstemperatur, den Betriebsstunden usw. abhängt.

Zudem kann eine Verschmutzung von Leuchtmitteln oder einer optischen Abdeckung zu einem höheren notwendigen Output der Strahlungsleistung führen um dieselbe Beleuchtungsstärke zu erreichen, was in einigen Druckschriften behandelt wird.

Für die Detektion eines Verschmutzungsgrades eines Fensters ist beispielsweise aus der DE 1 755 074 B1 bekannt, das Fenster mit einem Lichtstrahl zu bestrahlen, um an der verschmutzbaren Grenzfläche des Fensters für den Fall, dass keine Verschmutzung auftritt, eine Totalreflexion zu erzielen. Das innerhalb des Fensters total reflektierte Licht wird an der Innenseite des Fensters aus dem Fenster optisch ausgekoppelt und ausgewertet. Eine Abschwächung des total reflektierten Lichts wird somit als Maß für einen Verschmutzungsgrad des Fensters herangezogen. Die in der DE 1 755 074 B1 gezeigte Anordnung ist für Machine Vision Anwendungen aber gänzlich ungeeignet, da es in dieser Anwendung ja darauf ankommt, dass möglichst viel Licht aus dem Leuchtmittel austritt und eine Totalreflexion in einer optischen Abdeckung des Leuchtmittels daher völlig kontraproduktiv wäre.

Die DE 28 33 635 C2 zeigt eine ähnliche Anordnung unter Nutzung einer LED als Lampe, wobei hier keine Totalreflexion innerhalb einer Scheibe ausgenutzt wird, sondern ein von der Scheibe zurück reflektierter Anteil des Lichts ausgewertet wird. Hierzu wird die LED niederfrequent moduliert und auf die optische Grenzfläche ausgerichtet. Es wird nur ein kleiner Teil der Strahlungsleistung transmittiert und der zurück reflektierte Teil gemessen. Die DE 28 33 635 C2 zielt darauf ab, eine langfristige Verschmutzung der optischen Grenzfläche zu erfassen und bei Überschreiten eines Grenzwertes eine Reinigung der Grenzfläche auszulösen. Kurzfristige Schwankungen in der Strahlungsleistung aufgrund von Temperaturschwankungen oder Alterung werden nicht berücksichtigt.

Aus der EP 122 609 B1 geht wiederum ein Wolkenhöhenmessgerät hervor, bei dem die ausgestrahlte Lichtenergie, die durch Verschmutzung an einem Sendefenster gedämpft wird, konstant gehalten wird. Dazu wird die am Sendefenster zurück reflektierte Lichtenergie als Maß der Verschmutzung erfasst und die Sendeenergie des Senders zum Ausgleich der Verschmutzung geregelt. Es wird ein Messsignal in Form von Impulsfolgen ausgesendet und von den Wolken reflektiert und erfasst, wobei vor oder nach der Erfassung der Verschmutzungsgrad ermittelt wird. Damit wird für die nächste Messung die Sendeenergie durch Änderung der Dauer der Impulsfolge angepasst.

Die WO 2015/097476 A2 offenbart ein Beleuchtungssystem, wobei eine Speichereinheit den Verlauf von charakteristischen Größen, z.B. Temperatur von Lichtquelle und Umgebung, Steuerstrom, usw. speichert und die Lichtquelle abhängig vom Verlauf oder dem aktuellen Wert dieser Größen steuert.

Es ist die Aufgabe der gegenständlichen Erfindung ein Leuchtmittel für eine Machine Vision Anwendung anzugeben, das es ermöglicht die vom Leuchtmittel resultierende Bestrahlungsstärke in einem Leuchtbereich abhängig vom Arbeitsabstand möglichst genau einzustellen. Diese Aufgabe wird durch eine Anordnung gemäß Anspruch 1 und ein Verfahren gemäß Anspruch 13 gelöst.

Diese Aufgabe wird gelöst, indem ein Transmissionsteil eines von einer Lichtquelle abgegebenen und auf eine zum Schutz der Lichtquelle vorgesehene optische Abdeckung einfallenden Lichts durch die optische Abdeckung durchtritt wird und ein Reflexionsteil des einfallenden Lichts in der optischen Abdeckung reflektiert wird, wobei eine Intensität des Reflexionsteils erfasst wird, und ausgehend von der Intensität die Strahlungsleistung der Lichtquelle geregelt wird, um mit dem Transmissionsteil eine Bestrahlungsstärke in einem Leuchtbereich einzustellen. Die Intensität des Reflexionsteils in der optischen Abdeckung wird mittels eines Lichtsensors erfasst. Weiter wird die Aufgabe gelöst, indem die Anordnung zur Beleuchtung in einer Machine Vision Anwendung eine optische Abdeckung zum Schutz der Lichtquelle umfasst, die derart ausgestaltet ist, dass ein Transmissionsteil des einfallenden Lichts durch die optische Abdeckung durchtritt und ein Reflexionsteil des einfallenden Lichts in der optischen Abdeckung reflektiert wird, wobei die Anordnung zumindest einen umfasst, der die Intensität des Reflexionsteils in der optischen Abdeckung erfasst, wobei die Anordnung eine Steuereinheit umfasst, wobei die Steuereinheit mit dem Lichtsensor und der Lichtquelle verbunden ist und ausgestaltet ist um ausgehend von der Intensität des Reflexionsteils über eine Steuergröße, die Strahlungsleistung der Lichtquelle zu regeln um mit dem Transmissionsteil eine Bestrahlungsstärke in einem Leuchtbereich einzustellen. Die Steuereinheit kann dabei natürlich integraler Bestandteil des Leuchtmittels sein. Die zur Regelung verwendete Größe kann beispielsweise einen elektrischen Strom oder eine elektrische Leistung darstellen. Da der Reflexionsteil in der optischen Abdeckung und nicht das von der optischen Abdeckung zurück reflektierte Licht erfasst wird, ist keine Anbringung eines Lichtsensors auf Seite der Lichtquelle notwendig. Diese optische Abdeckung kann auch zusätzliche optische Aufgaben hinsichtlich des durch die optische Abdeckung transmittierten Lichts aufweisen, wie beispielsweise die Bereitstellung eines diffusen transmittierten Lichts oder optischer Filterfunktionen. Weiters kann die optische Abdeckung dem Schutz der Lichtquelle vor Verschmutzungen oder Beschädigungen dienen. Es kann somit natürlich auch eine bereits am Leuchtmittel vorhandene optische Abdeckung, die diese Aufgaben (Schutzfunktion und/oder optische Aufgaben hinsichtlich des transmittierten Lichts) erfüllt und zusätzlich erfindungsgemäße Reflexionen und Transmissionen wie oben beschrieben aufweist, verwendet werden. Das Leuchtmittel kann selbstverständlich auch mehrere Lichtquellen umfassen, wobei jede Lichtquelle von einer eigenen Steuereinheit gesteuert werden kann oder auch mehrere Lichtquellen oder auch alle Lichtquellen von einer Steuereinheit gesteuert werden können. Ebenso können mehrere Leuchtmittel eine gemeinsame Steuereinheit und/oder eine gemeinsame optische Abdeckung aufweisen.

Die US 2010/066253 A1 offenbart lichtdurchlässige Optiken, welche an einem Lichtleiter angebracht sind und gezielt Licht in den Lichtleiter einkoppeln. Das Licht wird weiter gezielt an einen Sensor geleitet. Die US 6,303,916 B1 zeigt ein Leuchtmittel für eine Machine Vision Anwendung, wobei die Intensität eines von einem Strahlteiler reflektierten Lichts mittels eines Sensors erfasst wird. Auch die US 2015/146751 A1 und die US 4958354 A zeigen derartige Systeme mit Lichtteilern und Sensoren. EP 2 336 741 A1 offenbart einen Temperatursensor, die DE 28 33 635 A1 eine Anordnung zur Messung einer Verschmutzung umfassend eine Diode und einen Detektor.

Die Relation der abgegebenen Strahlungsleistung der Lichtquelle des Leuchtmittels zur Steuergröße kann vorab, z.B. bereits in der Produktion des Leuchtmittels, gemessen werden. Damit kann in weiterer Folge ein Bezug zur durch den Lichtsensor gemessenen Intensität hergestellt werden. Es könnte natürlich auch zusätzlich ein Lichtsensor bei der Lichtquelle platziert und damit im laufenden Betrieb die abgegebene Strahlungsleistung ermittelt und der Steuereinheit zugeführt werden. Das ist jedoch mit zusätzlichen Kosten verbunden, zudem würde der Lichtsensor dann erst einen Teil der ausgeleuchteten Fläche belegen und das abgegebene Licht, z.B. durch Schattenbildung beeinflussen, was zu vermeiden ist.

Vorteilhafterweise wird die Intensität des Reflexionsteils an Rand der optischen Abdeckung gemessen. Dies hat unter anderem den Vorteil, dass die Messung in einem Bereich erfolgt, der für eine Verschmutzung (und damit Beeinflussung der Messung) unempfindlicher ist. Außerdem wird so Schattenbildung verhindert bzw. dem auszuleuchtenden Leuchtbereich kein Licht durch zwischen Lichtquelle und Leuchtbereich platzierte Sensoren entzogen.

Es können mehrere, vorzugsweise vier, Lichtsensoren am Rand der optischen Abdeckung vorhanden sein, die jeweils die Intensität des Reflexionsanteils an mehreren, vorzugsweise vier Stellen des Rands erfassen. Dies kann bei einer rechteckigen Ausführungsform der optischen Abdeckung hilfreich sein, jedoch auch an vier Stellen einer runden oder ovalen optischen Abdeckung. Eine Messung der Intensität des Reflexionsteils mit mehreren Lichtsensoren ermöglicht eine Ermittlung der transmittierten Strahlungsleistung als Funktion des Ortes an der optischen Abdeckung, was besonders vorteilhaft ist. So kann aus unterschiedlichen Werten der Intensität an unterschiedlichen Punkten des Randes (oder auch innerhalb) der optischen Abdeckung mittels eines geeigneten Rechenmodells die transmittierte Strahlungsleistung an mehreren Stellen der optischen Abdeckung ermittelt werden. Dies lässt dann Rückschlüsse auf die örtlich abhängige Bestrahlungsstärke bei definiertem Arbeitsabstand auf dem Leuchtbereich zu.

Der Lichtsensor, bzw. die Lichtsensoren messen den Reflexionsanteil in der optischen Abdeckung und können somit auch direkt an dem Rand/den Rändern der optischen Abdeckung angebracht sein. Dies stellt eine besonders einfache Ausgestaltung dar, selbstverständlich könnte der Reflexionsteil auch alternativ, beispielsweise mittels eines Lichtwellenleiters, abgeführt und mittels des Lichtsensors/der Lichtsensoren ausgewertet werden. Damit könnten beispielsweise weitere Schattenbildungen verringert werden, wobei diese am Rand der optischen Abdeckung keinen großen Einfluss auf die Anordnung haben. Natürlich ist eine derartige Abführung des Reflexionsteils mit zusätzlichen Kosten verbunden. Es ist auch denkbar, dass die Intensität des am Rand austretenden Reflexionsteils in einer bestimmten Entfernung vom Rand auch ohne Lichtwellenleiter gemessen wird.

Es kann der Lichtsensor als Spektralsensor ausgeführt sein, der unterschiedliche Spektralbereiche des Reflexionsteils in der optischen Abdeckung erfasst. Der Spektralsensor kann zwischen Wellenlänge und/oder Farbe unterscheiden, womit ein Messen der Intensität für unterschiedliche Spektralbereiche separat erfolgen kann.

Vorteilhafterweise ist die der Lichtquelle zugewandte Innenfläche der optischen Abdeckung reflexionsfrei ausgestaltet. Das bedeutet, dass das von der Lichtquelle abgegebene und an der optischen Abdeckung einfallende Licht zur Gänze als erster Transmissionsteil in die optische Abdeckung eindringt und in weiterer Folge an der Lichtquelle abgewandten Außenfläche in den Reflexionsteil und den Transmissionsteil aufgeteilt wird. Ist die Innenfläche der optischen Abdeckung nicht reflexionsfrei, so muss das Ausmaß dieser ersten Reflexion an der Innenfläche natürlich in die Berechnung der Strahlungsleistung einfließen.

Ganz besonders vorteilhaft ist eine Ausgestaltung der optischen Abdeckung in welcher Totalreflexion auftritt. Das bedeutet, dass jegliches einfallendes Licht (das nicht zuvor an der Innenfläche der optischen Abdeckung reflektiert wurde und nicht in weiterer Folge als Transmissionsteil durch die Außenfläche der optischen Abdeckung ausgetreten ist), also der gesamte Reflexionsteil, vollständig in der optischen Abdeckung verbleibt und bei weiterem Auftreffen auf die optischen Grenzschichten, also die Innenfläche oder Außenfläche der optischen Abdeckung, kein weiteres Licht ausgekoppelt wird. Diese Totalreflexion kann durch geeignete Manipulation des Materials, insbesondere des Brechungsindex, der optischen Abdeckung erreicht werden, wobei die optische Abdeckung dann wie ein Wellenleiter fungiert. Natürlich muss die optische Abdeckung weiterhin ausgestaltet sein, dass ein Teil des Lichts in Form eines ersten Transmissionsteils durch die Innenfläche in die optische Abdeckung eingekoppelt wird, in weiterer Folge einen Großteil davon als Transmissionsteil durch die Außenfläche transmittiert und ein kleiner Teil als Reflexionsteil an der Außenfläche reflektiert wird. Die darauffolgende Hin- und Her-Reflexion dieses Reflexionsteils zwischen Innenfläche und Außenfläche, also innerhalb der optischen Abdeckung erfolgt somit als Totalreflexion. Es kann lediglich eine Dämpfung des Reflexionsteils erfolgen, welcher je nach Material vernachlässigt werden kann oder in die Berechnung der Strahlungsleistung einfließt.

Die Modifikation der optischen Abdeckung für eine Totalreflexion verursacht natürlich erhebliche Kosten und erfordert auch Bereiche für das Anbringen von Prismen, Einkerbungen etc. Diese Bereiche sind dann für die Ausleuchtung nicht verwendbar was wiederum zu Schattenbildung führen kann.

Tritt innerhalb der optischen Abdeckung keine Totalreflexion auf, so ist zu beachten, dass sich der Reflexionsteil mit jeder Reflexion an der Innenfläche und Außenfläche der optischen Abdeckung verringert, was in der Steuereinheit bei der Regelung der Strahlungsintensität berücksichtigt werden muss. Auch in diesem Fall kann eine Dämpfung des Reflexionsteils berücksichtigt werden, sofern notwendig.

Vorteilhafterweise ist in der Umgebung der Lichtquelle ein Temperatursensor angebracht, der dazu dient die Umgebungstemperatur der Lichtquelle zu erfassen. Der Temperatursensor befindet sich vorteilhafterweise so nahe wie möglich an der Lichtquellen, um eine leichtere Rückrechnung auf die tatsächliche Temperatur der Lichtquelle zu ermöglichen. Es können auch mehrere Temperatursensoren verbaut werden (z.B. auf jeder Seite). Einen Schattenwurf oder Vermindern der Beleuchtungsstärke auf der Leuchtfläche ist jedenfalls zu vermeiden. Die Anbringung eines weiteren Sensors zur Messung der Umgebungstemperatur der gesamten Anordnung ist ebenfalls denkbar.

Das Leuchtmittel mit dem Temperatursensor kann mit einer Modelleinheit angeordnet sein, wobei in der Modelleinheit die Umgebungstemperatur der Lichtquelle mittels eines vorgegebenen Temperaturmodells in die Temperatur der Lichtquelle umgerechnet wird. Selbstverständlich kann die Modelleinheit integraler Bestandteil des Leuchtmittels und/oder der Steuereinheit sein.

Das Temperaturmodell dient als Rückrechenfunktion auf die tatsächliche Temperatur der Lichtquelle und ist auf den Typ der Lichtquelle und den Aufbau der Machine Vision Vorrichtung angepasst. Idealerweise sind alle temperaturbeeinflussenden Faktoren des Systems (Wärmewiderstände, verlustbehaftete Schaltungsanordnungen, usw.) im Temperaturmodell enthalten.

Die errechnete Temperatur der Lichtquelle kann weiter in die Berechnung der Strahlungsleistung, insbesondere mittels eines Puls/Pausenverhältnisses einer Steuergröße, miteinbezogen werden. Die Modelleinheit ermittelt somit aus der gemessenen Umgebungstemperatur die notwendige Änderung der Steuergröße, die notwendig ist um den Einfluss der Temperatur zu kompensieren.

Die Verschmutzung des gesamten Machine-Vision.Systems ist ein nicht zu unterschätzender Faktor. Dabei ist nicht nur die durch die Verschmutzung verringerte Bestrahlungsstärke auf dem Leuchtbereich zu beachten, sondern vor allem auch die Verschmutzung der Linse der Kamera. Eine übermäßige Verschmutzung kann die Machine Vision Anwendung somit untauglich machen. Durch geeignete Gegenmaßnahmen wie z.B. Erhöhung der Intensität des Leuchtmittels kann der Verschmutzung bis zu einem gewissen Maße entgegengewirkt werden. Steigt der Verschmutzungsgrad aber zu stark an, muss dieser gemeldet werden, um geeignete Gegenmaßnahmen, wie manuelle Säuberung des Systems bzw. der optischen Abdeckung, zu ergreifen. In diesem Fall muss die Machine Vision Anwendung bis zur Behebung des Problems abgebrochen werden.

Aus den Messungen der Intensität des Reflexionsanteils und der Umgebungstemperatur kann z.B. der Verschmutzungsgrad der optischen Abdeckung bestimmt werden: Liegt die gemessene Intensität außerhalb einer vorgegebenen Hüllkurve, welche sich aus z.B. Alterung, aktueller Steuergröße, bzw. aktuellem Betriebsstrom und Temperaturverhalten bestimmen lässt, so kann von einer Verschmutzung der optischen Abdeckung ausgegangen werden. Die Regelung der Steuergröße kann beispielsweise einfach über ein Puls-Pausenverhältnis der Steuergröße durchgeführt werden.

Die erfindungsgemäße Anordnung kann somit zum Ausleuchten eines Leuchtbereichs in einer Machine Vision Anwendung verwendet werden. Ganz besonders vorteilhaft ist eine Anwendung des beschriebenen Verfahrens, bei der die Bestrahlungsstärke auf dem Leuchtbereich konstant gehalten wird.

Beleuchtungen, insbesondere mit LED's, werden im Bereich Machine Vision häufig im Blitzbetrieb verwendet, da eine dauerhafte Beleuchtung bei vielen Anwendungen nicht erforderlich ist. Die Gründe dafür können wie folgt sein. Eine LED ist in der Lage, kurzzeitig bis zum fünffachen des Nennstroms zu verkraften. Dadurch ist es möglich kurzzeitig eine deutlich größere Strahlungsleistung zu emittieren. Zusätzlich erhöht der Blitzbetrieb im Vergleich zum Dauerbetrieb die Lebensdauer und senkt die Temperatur innerhalb des Gerätes. Auch wenn im Bereich der Machine Vision Anwendungen das Umgebungslicht immer eine Störquelle darstellt, dessen Einfluss nach Möglichkeit durch geeignete Maßnahmen vermindert oder völlig eliminiert werden sollte, kann diese die Messung der Strahlungsleistung beeinflussen. Beispielsweise kann die Zeit vor dem Einschalten der Lichtquelle im Blitzbetrieb dazu genutzt werden Reflexionen des Umgebungslichtes zu messen. Dadurch können Einflüsse des Umgebungslichtes auf die Messgenauigkeit deutlich reduziert werden.

Es kann über ein Rechenmodell (z.B. mittels einer Hüllkurve), welches die Eigenschaften der Lichtquelle, beispielsweise hinsichtlich der Temperatur, Lebensdauer/Betriebsstunden und Betriebsart (z.B. gepulster Betrieb), beinhaltet, auf den Verschmutzungsgrad der Abdeckung geschlossen werden. Weiter kann die Steuergröße nachgeregelt werden oder wenn ein Nachregeln nicht mehr möglich ist, ein Alarm ausgegeben werden, um auf die Verschmutzung und die damit beeinträchtigte oder nicht mehr gegebene Funktion des Leuchtmittels bzw. des Machine Vision Ssystems hinzuweisen.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Anordnung einer Machine Vision Anwendung,
Fig.2 die erfindungsgemäße Vorrichtung,
Fig.3 eine optische Abdeckung mit reflexionsfreier Innenfläche und Totalreflexion in der Abdeckung,
Fig.4 eine optische Abdeckung mit reflektierender Innenfläche und keiner Totalreflexion in der Abdeckung,
Fig.5 eine Draufsicht auf ein Leuchtmittel mit vier Lichtsensoren, vier Temperatursensoren und mehreren Lichtquellen.

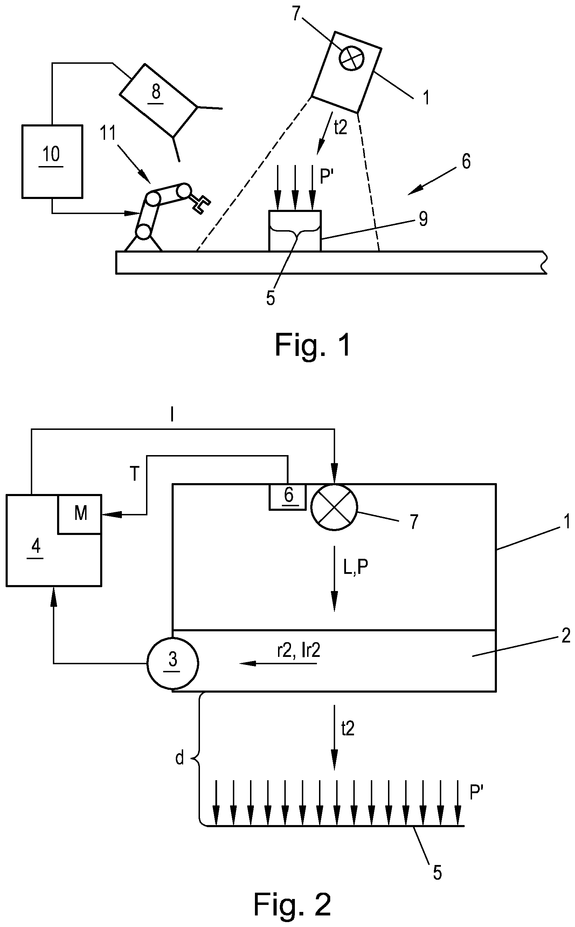

In Fig. 1 ist eine typische Anordnung einer Machine Vision Anwendungen dargestellt. Ein Leuchtmittel 1 mit einer Lichtquelle 7 beleuchtet einen Leuchtbereich 5 in einer Arbeitsstation 6, z.B. eine Ver- oder Bearbeitungsmaschine. Im Leuchtbereich 5 des Leuchtmittels 1 befindet sich ein Bauteil 9, das vom Leuchtmittel 1 mit Licht mit der Bestrahlungsstärke P' ausgeleuchtet wird und das von einer Kamera 8, die den Leuchtbereich 5 (oder einen Teil davon) erfasst, aufgenommen wird. Die von der Kamera 8 aufgenommene Aufnahme wird von einer Auswerteeinheit 10 ausgewertet und die daraus gewonnene Information wird verwendet, um die Arbeitsstation 6 und/oder eine Bearbeitungseinheit 11 in der Arbeitsstation 6 zu steuern oder zu regeln. Selbstverständlich kann das Leuchtmittel 1 auch integraler Bestandteil der (Smart-)Kamera 8 und/oder Auswerteeinheit 10 sein. Nachdem der Aufbau einer Machine Vision Anwendung hinlänglich bekannt ist, wird hier nicht näher auf Details solcher Machine Vision Anwendungen und Systeme eingegangen. Das erfindungsgemäße Verfahren kann dem konstanten Ausleuchten des Leuchtbereichs 5 dienen.

Mit Fig.2 wird das erfindungsgemäße Leuchtmittel 1 näher beschrieben. Das Leuchtmittel 1 ist zum Schutz der Lichtquelle 7 mit einer transparenten, bevorzugt flachen, optischen Abdeckung 2, z.B. aus geeignetem Glas oder Kunststoff, abgedeckt. Damit dient die optische Abdeckung 2 beispielsweise dem Schutz der Lichtquelle 7 vor Schmutz oder mechanischer Beschädigung, kann aber hinsichtlich des durch die optische Abdeckung 2 transmittierten Lichts auch optische Aufgaben erfüllen, wie z.B. die Realisierung eines optischen Filters oder der Erzeugung eines diffusen transmittierten Lichts. Der größte Teil des von der Lichtquelle 7 mit einer Strahlungsleistung P erzeugten Lichtes L tritt durch die Abdeckung 2 als Transmissionsteil t2 aus und weist, in einem vorgegebenen bzw. bekannten Arbeitsabstand d eine Bestrahlungsstärke P' in einem Leuchtbereich 5 auf. Ein Teil des von der Lichtquelle 7 emittierten Lichtes L wird jedoch in der Abdeckung 2 zwischen den optischen Grenzflächen der Abdeckung 2 reflektiert. Die Intensität Ir2 des in der optischen Abdeckung 2 reflektierten Reflexionsteils r2 wird von einem Lichtsensor 3 erfasst. Die Intensität Ir2 wird weiter der Steuereinheit 4 zugeführt, welche wiederum die Strahlungsleistung P der Lichtquelle 7 über die Steuergröße I regelt. Die Steuergröße I kann einen elektrischen Strom oder eine elektrische Leistung darstellen. Die Steuereinheit 4, die auch integraler Bestandteil des Leuchtmittels 1 und/oder der Kamera 8 sein kann, regelt über die Steuergröße I, vorzugsweise über ein Puls/Pausenverhältnis der Steuergröße I, die Strahlungsleistung P der Lichtquelle 7 des Leuchtmittels 1 welche z.B. durch eine Konstant-Stromquelle eingestellt wird, um eine gewünschte, vorgegebene Bestrahlungsstärke P' bei definiertem Arbeitsabstand d einzustellen. Die Steuereinheit 4, bzw. dafür notwendige Speicher und Prozessoren, können vom Leuchtmittel 4 ausgelagert sein, um keinen Platz im Leuchtmittel 4 beanspruchen zu müssen, oder können auch in das Leuchtmittel 1 integriert sein.

Aufgrund eines bekannten Zusammenhanges zwischen der von der Lichtquelle 7 abgegebenen Strahlungsleistung P und des Reflexionsteils r2 bzw. der gemessenen Intensität Ir2 des Reflexionsanteils r2 (bei vorgegebener optischer Abdeckung 2, vorgegebener Lichtquelle 7 und Geometrie der Anordnung) kann ermittelt werden, welche Bestrahlungsstärke P' durch den Transmissonsanteil t2 momentan im Leuchtbereich 5 vorliegt. Eine Regelung der Lichtquelle 7 kann nun dazu dienen die Bestrahlungsstärke P' in einem Arbeitsabstand d, beispielsweise auf der Leuchtfläche 5, einzustellen, bzw. konstant zu halten.

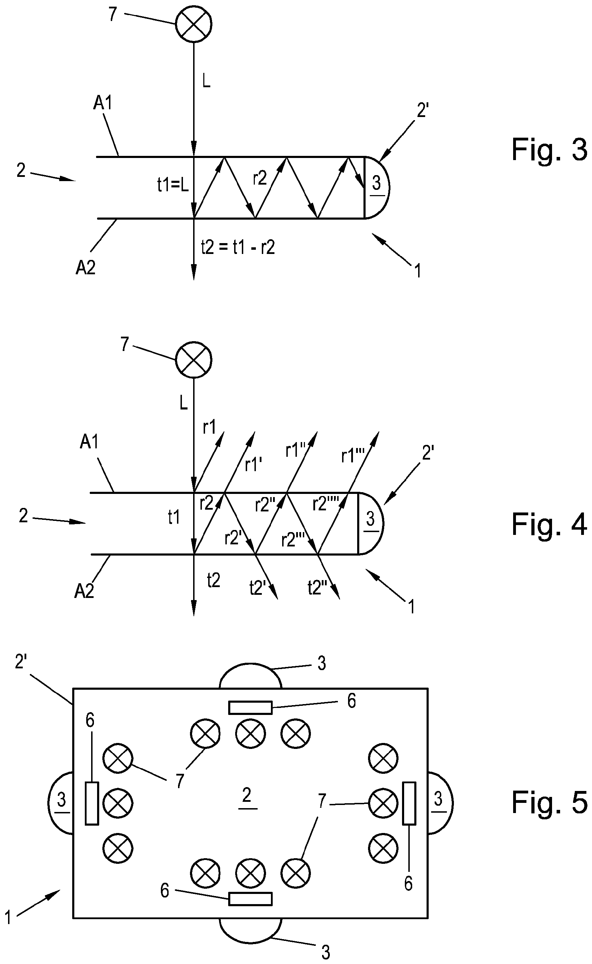

Wie in Fig.3 dargestellt weist die optische Abdeckung 2 eine der Lichtquelle 7 zugewandte Innenfläche A1 und eine der Lichtquelle 7 abgewandte und damit dem Leuchtbereich 5 zugewandte Außenfläche A2 als optische Grenzflächen auf. Das von der Lichtquelle 7 gesendete Licht L trifft auf die (auf Seite der Lichtquelle) reflexionsfreie Innenfläche A1 auf, wird in diesem Fall nicht reflektiert und wird in Fig.3 als erster Transmissionsteil t1, der dem einfallenden Licht L entspricht, zur Außenfläche A2 geleitet. An der Außenfläche A2 wird ein Reflexionsteil r2 des ersten Transmissionsteils t1 (der hier dem einfallenden Licht L entspricht) an die Innenfläche A1 zurück reflektiert. Da in Fig. 3 eine Totalreflexion des Reflexionsteils r2 in der optischen Abdeckung 2 auftritt, wird der Reflexionsteil r2 ohne weitere Auskopplung zwischen der Innenfläche A1 und Außenfläche A2 hin und her reflektiert und an den Rand 2' der optischen Abdeckung 2 geleitet. Die Intensität Ir2 des Reflexionsteils r2 wird vom Lichtsensor 3, beispielsweise an einem Rand 2' der optischen Abdeckung 2, erfasst. Es können natürlich mehrere Lichtsensoren 3 vorhanden sein, die jeweils die Intensität Ir2 des jeweiligen Reflexionsteils r2 erfassen. In Fig. 3 ist der Lichtsensor 3 am Rand 2' der optischen Abdeckung angebracht. Eine beispielhafte mittige Anbringung des Lichtsensors 3 an den Seiten der optischen Abdeckung 2 ermöglicht eine optimale Einkopplung des Reflexionsteils r2 in den Sensor 3. Zudem kann der Lichtsensor 3 als Spektralsensor ausgeführt sein. Damit können unterschiedliche Spektralbereiche des Reflexionsteils r2 erfasst, d.h. zwischen Wellenlänge und/oder Farbe unterscheiden werden, womit ein Messen der Intensität für unterschiedliche Spektralbereiche separat erfolgen kann. Damit können die Reflexionsteile r2 von Lichtquellen 7, die Licht L unterschiedlicher Spektren (IR, R,G,B,...) abgeben, z.B. in der Auswerteeinheit, unterschieden werden. Es ist damit sichergestellt, dass die nötige Empfindlichkeit des Lichtsensors 3 bei Beleuchtung mit unterschiedlichen Spektralbereichen gegeben ist. Gerade im IR Bereich haben einfache Lichtsensoren 3, die keine Spektralbereichs-Unterscheidung aufweisen, nur sehr geringe Empfindlichkeiten, bzw. können diese Spektren gar nicht erfassen. Zusätzlich kann so die Strahlungsleistung P der farblich unterschiedlichen Typen von Lichtquellen 7 (LED Typen) verglichen werden. Ein unregelmäßiges Verhalten der verschiedenen Typen von Lichtquellen (z.B. typabhängige unverhältnismäßig abfallende Strahlungsleistung P bei gleichen Betriebsbedingungen) kann so detektiert und daraufhin verschiedene Gegenmaßnahmen (z.B. Erhöhung der Steuergröße I, größere Pausen zwischen Impulsen der Steuergröße I um die Temperatur des Leuchtmittels 1 zu senken, usw.) ergriffen werden.

Fig. 4 zeigt einen allgemeineren Fall, bei dem in der optischen Abdeckung 2 keine Totalreflexion auftritt und die Innenfläche A1 auf Seite der Lichtquelle 7 nicht reflexionsfrei ist. Ein erster Reflexionsteil r1 des einfallenden Lichts L wird also an der Innenfläche A1 der Abdeckung 2 zum Leuchtmittel 2 zurück reflektiert. Dieser erste Reflexionsteil r1 wird in erster Linie durch den Einfallswinkel des Lichts L, Oberflächenrauheit der Innenfläche A1 und den Brechungsindex der optischen Abdeckung beeinflusst. Tritt ein erster Reflexionsteil r1 größer Null auf, so ist der durch die Innenfläche A1 tretende erste Transmissionsteil t1 des Lichts L kleiner als das einfallende Licht L. Tritt an der Innenfläche A1 keine Reflexion des eintreffenden Lichts auf, so entspricht der erste Transmissionsteil t1 dem einfallenden Licht L, wie in Fig. 3 dargestellt.

Der erste Transmissionsteil t1 trifft wiederum auf die Außenfläche A2 und wird zu einem Teil als Transmissionsteil t2 transmittiert und zu einem Teil als Reflexionsteil r2 zur Innenfläche zurückreflektiert. Der Transmissionsteil t2 dient in weiterer Folge der Beleuchtung des Leuchtbereichs 5 und sollte dementsprechend natürlich ausreichend groß sein. Der Reflexionsteil r2 wird weiterhin zwischen Innenfläche A1 und Außenfläche A2 reflektiert. Tritt wie in Fig. 3 Totalreflexion auf, so bleibt der Reflexionsteil r2, abgesehen von Dämpfungsverlusten, konstant und wird an den Rand 2' der optischen Abdeckung 2 geführt wo er austritt und wo die Intensität von einem Lichtsensor 3 detektiert wird. Tritt wie in Fig. 4 dargestellt innerhalb der optischen Abdeckung 2 keine Totalreflexion auf, so wird bei jeder Reflexion ein Teil des Reflexionsteils r2 aus der optischen Abdeckung, die als Wellenleiter fungiert, ausgekoppelt und es wird ein abgeschwächter weiterer Reflexionsteil r2', r2", r2''' am Lichtsensor 3 detektiert. Diese Abschwächung muss in weiterer Folge natürlich bei der Berechnung der Strahlungsleistung P, bzw. der dafür benötigten Steuergröße I, berücksichtigt werden. Die erwähnte Auskopplung bewirkt natürlich auch einen weiteren ersten Reflexionsteil r1', r1", r1''', der wie der ggfs. auftretende erste Reflexionsteil r1 zur Lichtquelle 7 geleitet wird. Außerdem wird ein weiterer Transmissionsteil t2', t2" verursacht, der zum Transmissionsteil t2 zu addieren ist. Es ist also ersichtlich, dass sofern keine Totalreflexion auftritt, die Berechnung der Strahlungsleistung P, bzw. der Steuergröße I die Vorgabe weiterer Parameter in Hinblick auf Reflexion und Transmission erfordert, wobei diese Parameter allerdings als bekannt vorausgesetzt werden können bzw. messtechnisch erfasst werden können.

Der Reflexionsteil r2, der Transmissionsteil t2, die weiteren Reflexionsteile r2', r2" ,r2''' und die weiteren ersten Reflexionsteile r1', r1", r1''', sowie die weiteren Transmissionsteile t2', t2" sind dabei abhängig von der Art und Beschaffenheit der verwendeten Abdeckung 2, insbesondere dem Brechungsindex und Einfalls- und Ausfallswinkeln. Außerdem ist die Art der Lichtquelle 7 (z.B. LED,...) im Leuchtmittel 1 entscheidend, sowie die abgegebene Strahlungsleistung P der Lichtquelle 7. Diese Parameter können für beliebige Kombinationen von Abdeckungen 2 und Lichtquelle 7 vorab (empirisch) ermittelt werden und können als bekannt vorausgesetzt werden.

Aufgrund von äußeren Einflüssen, insbesondere Temperaturschwankungen, können sich weiterhin Schwankungen der Strahlungsleistung P ergeben, was durch Ermittlung der Umgebungstemperatur T der Lichtquelle 7 mittels eines Temperatursensors 6 ausgeglichen werden kann, wie in Fig.2 angedeutet. Dazu wird ein vorgegebenes Temperaturmodell in einer Modelleinheit M, die hier in der Steuereinheit 4 integriert ist, berücksichtigt, das die tatsächliche Temperatur des Leuchtmittels 1 errechnet und die Strahlungsleistung P entsprechend der Temperatur T korrigiert. Außerdem kann über die Temperatur und die aktuelle Strahlungsleitung P der Lichtquelle 7 und die Intensität Ir2 des Reflexionsteils r2 in der optischen Abdeckung (2) ein Rückschluss auf die Verschmutzung der optischen Abdeckung 2 gezogen werden. Modelleinheit M und/oder Steuereinheit 4 können wie in Fig. 2 dargestellt integraler Bestandteil des Leuchtmittels 1 sein, können jedoch auch ausgelagert sein.

Fig. 5 zeigt eine Draufsicht auf ein Leuchtmittel 1 mit vier Lichtsensoren 3, die jeweils an unterschiedlichen Abschnitten des Rands 2' der optischen Abdeckung 2 angebracht sind. Das Leuchtmittel 1 umfasst mehrere Lichtquellen 7, die sich die optische Abdeckung 2 teilen. Die Temperatursensoren 6 sind hier vorteilhafterweise hinter den Lichtquellen 7, also auf der Abdeckung 2 abgewandten Seite des Leuchtmittels 1, angebracht um einen Schattenwurf zu minimieren, aber dennoch eine genaue Temperaturmessung zu ermöglichen.

## Patentansprüche

1. Anordnung zur Beleuchtung in einer Machine Vision Anwendung, wobei die Anordnung ein Leuchtmittel (1) mit zumindest einer Lichtquelle (7) umfasst, die Licht (L) mit einer Strahlungsleistung (P) abgibt, **dadurch gekennzeichnet, dass** die Anordnung eine optische Abdeckung (2) zum Schutz der Lichtquelle (7) umfasst, die derart ausgestaltet ist, dass ein Transmissionsteil (t2) des einfallenden Lichts (L) durch die optische Abdeckung (2) durchtritt (1) und ein Reflexionsteil (r2) des einfallenden Lichts (L) in der optischen Abdeckung (2) reflektiert wird, **dass** die Anordnung ein Lichtsensor (3) umfasst, der die Intensität (Ir2) des Reflexionsteils (r2) in der optischen Abdeckung (2) erfasst **und dass** die Anordnung eine Steuereinheit (4) umfasst, wobei die Steuereinheit (4) mit dem Lichtsensor (3) und der Lichtquelle (7) verbunden ist und ausgestaltet ist, um ausgehend von der Intensität (Ir2) des Reflexionsteils (r2) über eine Steuergröße (I) die Strahlungsleistung (P) der Lichtquelle (7) zu regeln, um mit dem Transmissionsteil (t2) eine Bestrahlungsstärke (P') in einem Leuchtbereich (5) einzustellen.

2. Anordnung nach Anspruch 1, **dadurch gekennzeichnet, dass** der Lichtsensor (3) die Intensität des Reflexionsteils (r2) an einem Rand (2') der optischen Abdeckung (2) erfasst.

3. Anordnung nach Anspruch 2, **dadurch gekennzeichnet, dass** die Anordnung weitere, vorzugsweise ingesamt vier, Lichtsensoren (3) umfasst, die die Intensität (Ir2) des Reflexionsteils (r2) an weiteren, vorzugsweise vier, Stellen des Rands (2') erfassen.

4. Anordnung nach Anspruch 2, wobei der Lichtsensor an dem Rand (2') der optischen Abdeckung angebracht ist oder nach Anspruch 3, wobei die Lichtsensoren an dem Rand (2') der optischen Abdeckung angebracht sind.

5. Anordnung nach einem der Ansprüche 1 bis 4, **dadurch gekennzeichnet, dass** eine dem Leuchtmittel (1) zugewandte Innenfläche (A1) der optischen Abdeckung (2) reflexionsfrei ist.

6. Anordnung nach einem der Ansprüche 1 bis 5, **dadurch gekennzeichnet, dass** in der optischen Abdeckung (2) Totalreflexion auftritt.

7. Leuchtmittel nach einem der Ansprüche 1 bis 6, **dadurch gekennzeichnet, dass** der Lichtsensor (3) als Spektralsensor ausgeführt ist, der unterschiedliche Spektralbereiche des Reflexionsteils (r2) in der optischen Abdeckung (2) erfasst.

8. Anordnung nach einem der Ansprüche 1 bis 7, **dadurch gekennzeichnet, dass** die Anordung in der Umgebung der Lichtquelle (7) einen Temperatursensor (6) umfasst, der dazu dient die Umgebungstemperatur (T) der Lichtquelle (7) zu erfassen.

9. Anordnung nach einem der Ansprüche 1 bis 8, wobei die Steuereinheit (4) in das Leuchtmittel (1) integriert ist.

10. Anordnung nach einem der Ansprüche 8 bis 9, wobei die Anordnung eine Modelleinheit (M) umfasst, wobei der Temperatursensor (6) mit der Modelleinheit (M) verbunden ist, wobei die Modelleinheit (M) über ein vorgegebenes Temperaturmodell die Umgebungstemperatur (T) in die Temperatur der Lichtquelle (7) umrechnet.

11. Anordnung nach Anspruch 10, wobei die Modelleinheit (M) in das Leuchtmittel integriert ist.

12. Verwendung einer Anordnung nach einem der Ansprüche 1 bis 11 zum konstanten Ausleuchten eines Leuchtbereichs (5) in einer Machine Vision Anwendung.

13. Verfahren zur Beleuchtung in einer Machine Vision Anwendung, wobei Licht (L) mit einer Strahlungsleistung (P) von einer Lichtquelle (7) abgegeben wird, **dadurch gekennzeichnet, dass** ein Transmissionsteil (t2) des Lichts (L) durch eine zum Schutz der Lichtquelle (7) vorgesehene optische Abdeckung (2) transmittiert und ein Reflexionsteil (r2) des Lichts in der optischen Abdeckung (2) reflektiert wird, dass eine Intensität (Ir2) des Reflexionsteils (r2) durch zumindest einen Lichtsensor (3) erfasst wird, **und dass** ausgehend von der Intensität (Ir2) die Strahlungsleistung (P) der Lichtquelle (1) durch eine Steuereinheit (4) geregelt wird, um mit dem Transmissionsteil (t2) eine Bestrahlungsstärke (P') in einem Leuchtbereich (5) einzustellen.

14. Verfahren nach Anspruch 13, **dadurch gekennzeichnet, dass** die Bestrahlungsstärke (P') in einem Arbeitsabstand (d) konstant gehalten wird.

15. Verfahren nach Anspruch 13 oder 14, **dadurch gekennzeichnet, dass** die Intensität (Ir2) des Reflexionsteils (r2) an mehreren, vorzugsweise vier, Stellen der optischen Abdeckung (2) erfasst wird.

16. Verfahren nach einem der Ansprüche 13 bis 15, **dadurch gekennzeichnet, dass** die Umgebungstemperatur (T) der Lichtquelle (7) erfasst und über ein vorgegebenes Temperaturmodell zur Regelung der Strahlungsleistung (P) herangezogen wird.

17. Verfahren nach Anspruch 16, **dadurch gekennzeichnet, dass** aus der Intensität (Ir2), der Strahlungsleistung (P) und der Umgebungstemperatur (T) auf einen Grad der Verschmutzung der optischen Abdeckung (2) geschlossen wird.

18. Verfahren nach einem der Ansprüche 13 bis 17, **dadurch gekennzeichnet, dass** bei Überschreiten einer maximalen Intensität (Ir2) des Reflexionsteils (r2) ein Alarm ausgegeben wird.

## Claims

1. Arrangement for illumination in a machine vision application, wherein the arrangement comprises lighting means (1), with at least one light source (7) that emits light (L) with a radiant power (P), **characterized in that** the arrangement comprises an optical covering (2) for protection of the lighting means (1), which is configured such that a transmitted component (t2) of the incident light (L) passes through (1) the optical covering (2) and a reflected component (r2) of the incident light (L) is reflected in the optical covering (2), **in that** the arrangement comprises a light sensor (3), which detects the intensity (Ir2) of the reflected component (r2) in the optical covering (2) **and in that** the arrangement comprises a control unit (4), wherein the control unit (4) is connected to the light sensor (3) and the light source (7) and is configured to control the radiant power (P) of the light source (7) by means of a control variable (I) based on the intensity (Ir2) of the reflected component (r2) in order to use the transmitted component (t2) to adjust an irradiance (P') in an illuminated area (5).

2. Arrangement according to claim 1, **characterized in that** the light sensor (3) detects the intensity of the reflected component (r2) at an edge (2') of the optical covering (2).

3. Arrangement according to claim 2, **characterized in that** the arrangement comprises further light sensors (3), preferably four light sensors (3) in total, which detect the intensity (Ir2) of the reflected component (r2) at further locations, preferably four locations, on the edge (2').

4. Arrangement according claim 2 wherein the light sensor (3) is located at the edge (2') of the optical covering (2) or according to claim 3 wherein the light sensors (3) are located at the edge (2') of the optical covering (2).

5. Arrangement according to one of claims 1 through 4, **characterized in that** an inner surface (A1) of the optical covering (2) that faces the lighting means (1) is non-reflective.

6. Arrangement according to one of claims 1 through 5, **characterized in that** total reflection occurs in the optical covering (2).

7. The lighting means according to one of claims 1 through 6, **characterized in that** the light sensor (3) is configured as a spectral sensor that detects the various spectral ranges of the reflected component (r2) in the optical covering (2).

8. Arrangement according to one of claims 1 through 7, **characterized in that** the arrangement comprises a temperature sensor (6) in the vicinity of the light source (7), which serves to detect the ambient temperature (T) of the light source (7).

9. Arrangement according to one of claims **Fehler! Verweisquelle konnte nicht gefunden werden.** through 8, wherein the control unit (4) is integrated into the lighting means (1).

10. Arrangement according to one of claims 8 through 9, wherein the arrangement comprises a modeling unit (M), wherein the temperature sensor (6) is connected with the modeling unit (M), wherein the modeling unit (M) converts the ambient temperature (T) into the temperature of the light source (7) using a prescribed temperature model.

11. Arrangement according to claim 10, wherein the modeling unit (M) is integrated into the lighting means.

12. A use of an arrangement according to one of claims 1 through 11 for the constant illumination of an illuminated area (5) in a machine vision application.

13. A method for illumination in a machine vision application, wherein light (L) with radiant power (P) is emitted by a light source (7), **characterized in that** a transmitted component (t2) of the light (L) is transmitted through an optical covering (2), provided for protection of the light source (7) and a reflected component (r2) of the light is reflected in the optical covering (2), **and in that** an intensity (Ir2) of the reflected component (r2) is detected by at least one light sensor (3), **and in that** the radiant power (P) of the light source (1) is regulated on the basis of said intensity (Ir2) by a control unit (4) so that the transmitted component (t2) can be used to adjust an irradiance (P') in an illuminated area (5).

14. The method according to claim 13, **characterized in that** the irradiance (P') at a working distance (d) is kept constant.

15. The method according to claim 13 or 14, **characterized in that** the intensity (Ir2) of the reflected component (r2) is detected in a plurality of locations, preferably four, in the optical covering (2).

16. The method according to one of claims 13 through 15, **characterized in that** the ambient temperature (T) of the light source (7) is detected and is drawn upon by a prescribed temperature model to regulate radiant power (P).

17. The method according to claim 16, **characterized in that** a conclusion is drawn about the degree of contamination on the optical covering (2) based on the intensity (Ir2), radiant power (P) and temperature (T).

18. The method according to one of claims 13 through 17, **characterized in that** an alarm is emitted if the maximum intensity (Ir2) of the reflected component (r2) is

## Revendications

1. Dispositif d'éclairage dans une application de vision artificielle, le dispositif comprenant un moyen d'éclairage (1) doté d'au moins une source lumineuse (7) émettant une lumière (L) ayant une puissance de rayonnement (P), **caractérisé en ce que** le dispositif comprend un recouvrement optique (2) destiné à protéger la source lumineuse (7), laquelle source lumineuse est conçue de telle manière qu'un élément de transmission (t2) de la lumière incidente (L) passe (1) à travers le recouvrement optique (2) et qu'un élément de réflexion (r2) de la lumière incidente (L) est réfléchie dans le recouvrement optique (2), **en ce que** le dispositif comprend un capteur de lumière (3) qui détecte l'intensité (Ir2) de l'élément de réflexion (r2) dans le recouvrement optique (2), **et en ce que** le dispositif comprend une unité de commande (4), l'unité de commande (4) étant reliée au capteur de lumière (3) et à la source lumineuse (7), et étant conçue pour régler la puissance de rayonnement (P) de la source lumineuse (7) en fonction de l'intensité (Ir2) de l'élément de réflexion (r2) au moyen d'une grandeur de commande (I) afin de régler une intensité de rayonnement (P') dans une zone éclairée (5) à l'aide de l'élément de transmission (t2).

2. Dispositif selon la revendication 1, **caractérisé en ce que** le capteur de lumière (3) détecte l'intensité de l'élément de réflexion (r2) sur un bord (2') du recouvrement optique (2).

3. Dispositif selon la revendication 2, **caractérisé en ce que** le dispositif comprend en outre des capteurs de lumière (3), de préférence au total quatre, qui détectent l'intensité (Ir2) de l'élément de réflexion (r2) en d'autres points, de préférence quatre, du bord (2').

4. Dispositif selon la revendication 2, dans lequel le capteur de lumière est monté sur le bord (2') du recouvrement optique ou selon la revendication 3, dans lequel les capteurs de lumière sont montés sur le bord (2') du recouvrement optique.

5. Dispositif selon l'une des revendications 1 à 4, **caractérisé en ce qu'**une surface intérieure (A1) du recouvrement optique (2) orientée vers la source lumineuse (1) est exempte de réflexion.

6. Dispositif selon l'une des revendications 1 à 5, **caractérisé en ce que** la réflexion totale se produit dans le recouvrement optique (2).

7. Moyen d'éclairage selon l'une des revendications 1 à 6, **caractérisé en ce que** le capteur de lumière (3) est réalisé sous la forme d'un capteur spectral qui détecte différentes gammes spectrales de l'élément de réflexion (r2) dans le recouvrement optique (2).

8. Dispositif selon l'une des revendications 1 à 7, **caractérisé en ce que** le dispositif comprend un capteur de température (6) au voisinage de la source lumineuse (7), lequel capteur de température sert à détecter la température ambiante (T) de la source lumineuse (7).

9. Dispositif selon l'une des revendications 1 à 8, dans lequel l'unité de commande (4) est intégrée au moyen d'éclairage (1).

10. Dispositif selon l'une des revendications 8 à 9, le dispositif comprenant une unité de modèle (M), le capteur de température (6) étant relié à l'unité de modèle (M), l'unité de modèle (M) convertissant la température ambiante (T) en température de la source lumineuse (7) par l'intermédiaire d'un modèle de température prédéfini.

11. Dispositif selon la revendication 10, dans lequel l'unité de modèle (M) est intégrée à la source lumineuse.

12. Utilisation d'un dispositif selon l'une des revendications 1 à 11, pour l'éclairage constant d'une zone éclairée (5) dans une application de vision artificielle.

13. Procédé d'éclairage dans une application de vision artificielle, selon lequel une lumière (L) ayant une puissance de rayonnement (P) est émise par une source lumineuse (7), **caractérisé en ce qu'**un élément de transmission (t2) de la lumière (L) est transmis à travers un recouvrement optique (2) destiné à protéger la source lumineuse (7), et un élément de réflexion (r2) de la lumière est réfléchie dans le recouvrement optique (2), **en ce qu'**une intensité (Ir2) de l'élément de réflexion (r2) est détectée par au moins un capteur de lumière (3), **et en ce que,** en fonction de l'intensité (Ir2), la puissance de rayonnement (P) de la source lumineuse (1) est réglée par une unité de commande (4) afin de régler une intensité de rayonnement (P') dans une zone éclairée (5) à l'aide de l'élément de transmission (t2).

14. Procédé selon la revendication 13, **caractérisé en ce que** l'intensité de rayonnement (P') est maintenue constante à une distance de travail (d).

15. Procédé selon la revendication 13 ou 14, **caractérisé en ce que** l'intensité (Ir2) de l'élément de réflexion (r2) est détectée en plusieurs points, de préférence quatre, du recouvrement optique (2).

16. Procédé selon l'une des revendications 13 à 15, **caractérisé en ce que** la température ambiante (T) de la source lumineuse (7) est détectée et utilisée pour réguler la puissance de rayonnement (P) par l'intermédiaire d'un modèle de température prédéfini.

17. Procédé selon la revendication 16, **caractérisé en ce qu'**un degré de pollution du recouvrement optique (2) est déduit de l'intensité (Ir2), de la puissance de rayonnement (P) et de la température ambiante (T).

18. Procédé selon l'une des revendications 13 à 17, **caractérisé en ce qu'**un signal d'alarme est émis lorsqu'une intensité maximale (Ir2) de l'élément de réflexion (r2) est dépassée.
